# EUROPÄISCHE PATENTSCHRIFT

(11) **EP 1 846 239 B1**
(45) Veröffentlichungstag und Bekanntmachung des Hinweises auf die Patenterteilung: **15.08.2012**
(21) Anmeldenummer: 06706538.3
(22) Anmeldetag: 01.02.2006
(51) Int. Cl.: B32B 27/02, A01G 9/14, B32B 27/08, D06N 3/18, D06N 3/04, B32B 27/12, B32B 27/30, B32B 27/32

(54) **FOLIENMEMBRAN MIT HERVORRAGENDER WITTERUNGSBESTÄNDIGKEIT, HOHER DURCHLÄSSIGKEIT FÜR SOLARE WÄRMESTRAHLUNG, EFFEKTIVER ZURÜCKHALTUNG DER VON DER ERDE EMITTIERTEN WÄRMESTRAHLUNG UND HOHER MECHANISCHER FESTIGKEIT SOWIE VERFAHREN ZUR HERSTELLUNG DER FOLIENMEMBRAN**
FILM MEMBRANE WITH EXCELLENT WEATHER-RESISTANT PROPERTIES, HIGH TRANSMISSION OF SOLAR THERMAL RADIATION, EFFECTIVE RETENTION OF THERMAL RADIATION EMITTED BY THE EARTH AND HIGH DEGREE OF MECHANICAL STRENGTH AND METHOD FOR PRODUCING SAID FILM MEMBRANE
MEMBRANE EN FEUILLE PRESENTANT UNE EXCELLENTE RESISTANCE AUX INTEMPERIES, UNE HAUTE PERMEABILITE AU RAYONNEMENT THERMIQUE SOLAIRE, UN BLOCAGE EFFICACE DU RAYONNEMENT THERMIQUE EMIS PAR LA TERRE ET UNE HAUTE RESISTANCE MECANIQUE ET PROCEDE DE PRODUCTION DE CETTE MEMBRANE EN FEUILLE

(30) Priorität: 08.02.2005 DE 102005005836; 26.04.2005 DE 102005019669
(43) Veröffentlichungstag der Anmeldung: 24.10.2007
(73) Patentinhaber: Evonik Röhm GmbH, 64293 Darmstadt (DE)
(72) Erfinder: NUMRICH, Uwe, 64846 Gross-Zimmern (DE); NEUHÄUSER, Achim, 55128 Mainz (DE); ARNDT, Thomas, 64750 Lützelbach (DE); DICKHAUT-BAYER, Günther, 64560 Riedstadt (DE); LASCHITSCH, Alexander, 60314 Frankfurt/Main (DE); IRAWAN, Lim Hendra, Bandung 40172 (ID)
(86) Internationale Anmeldenummer: PCT/EP2006/000852
(87) Internationale Veröffentlichungsnummer: WO 2006/084611

(56) Entgegenhaltungen:
- WO-A-00/59723
- DE-A1- 10 318 877
- US-B1- 6 818 091
- PATENT ABSTRACTS OF JAPAN Bd. 2003, Nr. 06, 3. Juni 2003 (2003-06-03) & JP 2003 055625 A (SEKISUI CHEM CO LTD), 26. Februar 2003 (2003-02-26)

## Beschreibung

### Gebiet der Erfindung

Die Erfindung betrifft ein Produkt, das neben einer hohen Durchlässigkeit für sichtbares Licht ein hohes Zurückhaltevermögen für Wärmestrahlung aufweist und darüber hinaus hervorragend witterungsbeständig ist und ein Verfahren zum Beschichten mit einer Deckschicht aus Polymethyl(meth)acrylat (PMMA). Die Basis besteht aus einem Gewebe aus thermoplastischen Kunststoffen, beispielsweise HD-Polyethylen (HDPE), Polypropylen (PP) oder Polyestern. Zwischen der Beschichtung aus PMMA und dem Gewebe können gegebenenfalls eine oder mehrere zusätzliche Kunststoffformkörper angeordnet sein, die die Haftung des Verbunds verbessern.

### Stand der Technik

Die vorliegende Erfindung ist auf ein Verfahren zur Herstellung von Verbundwerkstoffen gerichtet. Insbesondere beschäftigt sich die Erfindung mit einem Verfahren zur Oberflächenvergütung von Werkstoffen mittels Polymethyl(meth)acrylatschichten. Die zur Oberflächenvergütung verwendeten Polymerschichten auf Basis von Polymethyl(meth)acrylaten werden dabei aus bestimmten Polymethyl(meth)acrylat-Copolymeren hergestellt und in einer bestimmten Art und Weise auf die Substrate aufgebracht. Oberflächenvergütete Gegenstände sind bekannte Fabrikationserzeugnisse, die für viele diverse Verwendungszwecke wünschenswert sind, da sie durch die vorteilhafte Kombination von physikalischen Eigenschaften gekennzeichnet sind, welche die einzelnen Materialkomponenten nicht besitzen.
Von Polymethyl(meth)acrylaten ist bekannt, dass sie den oberflächenvergüteten Materialien in hohem Maße erwünschte Eigenschaften, insbesondere hohe Transparenz, Kratzfestigkeit und Witterungsbeständigkeit verleihen.

Es hat daher nicht an Versuchen gefehlt, z.B. PMMA-beschichtete Materialien herzustellen. Einen Problempunkt bei diesen Beschichtungen bildet jedoch die Tatsache, dass oftmals keine oder nur eine geringe Haftung zwischen den verschiedenartigen Schichten besteht, welches zur einer frühzeitigen Ablösung der Schutzschicht oder zumindest zu einer eingeschränkten Verarbeitbarkeit der Verbundwerkstoffe führt.
Eine ideale Schutzschicht haftet gut auf dem Untergrund, ist gleichzeitig hart und flexibel, beständig gegen Witterungseinflüsse, Lösungsmittel, Abrieb und Hitze. Es ist schwierig, ein Optimum all dieser Eigenschaften zu erreichen, da die Verbesserung einer Eigenschaft meist zu Lasten anderer geht. Gerade bei der Bearbeitung und Formgebung von bereits oberflächenvergüteten Substraten ist eine hohe Elastizität und Haftung wünschenswert, um ein Abplatzen der Schutzschicht an den Knickstellen zu verhindern. Gleichzeitig sollte die Schutzschicht hart genug sein, um gegen mechanische Einwirkungen beständig zu sein.

Um eine ausreichende Haftung zwischen den meist chemisch verschieden aufgebauten Werkstoffen und der Oberflächenvergütung zu gewährleisten, kann auf die Mithilfe von Klebern zurückgegriffen werden. Weiterhin hat es sich diesbezüglich als vorteilhaft erwiesen, zwischen dem Substrat und der Schutzschicht (genannt: Capstock) kovalente Bindungen aufzubauen: Schultz et al., J. Appl. Polym. Science 1990, 40, 113-126; Avramova et al. 1989,179,1-4). Dies wird z.B. durch Einbau spezieller Monomere (Reaktiv-Monomere) in die Polymermatrix der Schutzschicht erreicht, die fähig sind, mit den Resten der Reaktiv-Monomere auf der Oberfläche des Substrats oder dem darauf haftenden Kleber zu reagieren.

In der EP 911 148 werden Kleber vorgestellt, die u. a mit "Reaktiv-Monomeren" versehen sind und sich für die Anheftung von LCP-Filmen auf Polyethylensubstraten eignen. Die Mehrfachfilme werden über den Schmelzpunkt der höchstschmelzenden Einzelkomponente erwärmt, um so eine innige Verschmelzung der einzelnen Filme miteinander zu erreichen.

Die EP 271 068 berichtet von Blends aus Polyvinylfluoriden und PMMA-GMA-Copolymeren, welche bei erhöhten Temperaturen auf modifizierte Polystyrolplatten laminiert werden.

In der DE 10 010 533 wird eine Mehrschichtfolie vorgeschlagen, die aus zwei Schichten besteht, wobei die erste Schicht aus Acrylharz ist und die zweite Schicht jeweils ein Copolymer aus entweder einem Acrylharz und einem Copolymer auf Olefinbasis, erhalten durch Copolymerisation eines Olefins und mindestens eines Monomeren, ausgewählt aus z.B. ungesättigten Carbonsäuren, Carbonsäureanhydriden oder glycidylgruppenenthaltenden Monomeren. Diese Folie soll eine ausgezeichnete Schmelzhaftung auf Harzsubstraten auf Polyolefinbasis aufweisen. Es werden bei diesem Verfahren also zwei Polymerschichten aufeinanderlaminiert und anschließend mit der die "Reaktiv-Monomere"-enthaltenden Seite auf das zu laminierende Polyolefinharz z.B. mittels eines Klebformverfahrens aufgebracht.

In der DE 43 370 62 werden Metallbleche mit Dreifachschichten aus themoplastischen Harzen derart laminiert, dass während des Extrusionsbeschichtungsprozederes eine Temperatur von mindestens 30°C oberhalb der Glastemperatur der inneren Harzschicht eingestellt wird.

Die japanische Anmeldung H9-193189 beschreibt ebenso wie die DE 10 0105 33 einen Mehrschichtverbund aus einer ersten Schicht, welche aus einem thermoplastischen PMMA-Polymer besteht, einer zweiten Schicht bestehend aus einem reaktiv-modifiziertem Polyolefin und einer dritten Schicht, welche aus einem eingefärbtem Olefinpolymer aufgebaut ist.

Um die gewünschten oben angesprochenen vorteilhaften Eigenschaften der Materialien wie hohe und dauerhafte Verbundhaftung etc. zu erhalten, bietet der bekannte Stand der Technik lediglich spezielle Einzellösungen an, die sich nicht verallgemeinern lassen oder die vom apparativen oder logistischen Aufwand nachteilig erscheinen, wie insbesondere das Verarbeiten von Mehrfachschichtmaterialien als Schutzschicht.

JP 2003 055625 beschreibt einen mehrschichtigen Verbundwerkstoff bestehend aus einem Gewebe angeordnet zwischen zwei Polyolefinschichten, wobei auf einer Seite dieser Schichten eine Polymethylmethacrylatschicht angeordnet ist. Der Verbundwerkstoff wird durch ein Extrusionsverfahren hergestellt. Dem Fachmann ist jedoch leicht ersichtlich, dass die Haftung einer Polymethylmethacrylatschicht auf einer Polyolefinschicht sehr schlecht ist und eine solche Membran entsprechend nur über geringe Nutzungsdauer verfügen kann.

In WO 00/59723 ist ein lichtdurchlässiges Bespannmaterialien für Gewächshäuser, das aus einer textilen Gitterstruktur, auf die eine Polypropylenfolie aufkaschiert oder durch Heißsiegeln aufgebracht ist, besteht. Eine Polyolefinoberfläche zeigt jedoch eine nur geringe Witterungsbeständigkeit in Langzeitanwendungen.

Ausgehend von diesem bekannten Stand der Technik besteht deshalb immer noch ein Bedürfnis an neuen Oberflächenvergotungstechniken, welche für technische Anwendungen oder in der Herstellung Vorteile bieten.

Aufgabe der vorliegenden Erfindung war daher die Angabe eines weiteren Verfahrens zur Oberflächenvergütung von Werkstoffen und der mittels dieses Verfahrens hergestellten Verbundwerkstoffe. Das Verfahren sollte es dem Fachmann insbesondere ermöglichen, eine Polymethyl(meth)acrylat-basierte Schutzschicht (Capstock) in möglichst einfacher und effizienter Weise auf eine möglichst große Vielzahl von Substratmaterialien aufbringen zu können, wobei die oben angesprochenen vorteilhaften und gewünschten Eigenschaften nach Möglichkeit voll ausgebildet werden. Ein ganz besonderes Augenmerk sollte darauf gerichtet sein, dass die Variabilität an Substratmaterialien nicht zu Lasten der Effizienz und Handhabbarkeit des erfindungsgemäß im technischen Maßstab angewandeten Verfahrens gereicht.

Es bestand weiterhin die Aufgabe, für ein vorhandenes Gewebe aus thermoplastischen Kunststoffen, beispielsweise Polyethylen oder Polypropylen oder Polyester, insbesondere HDPE, eine Beschichtung zu entwickeln, die
➢ mechanisch stabil
➢ witterungsbeständig
➢ UV-stabil und
➢ transparent ist.

Ferner sollten die Herstellungskosten durch ein kontinuierliches Beschichtungsverfahren so gering wie möglich gehalten werden.

Ferner soll durch die Beschichtung des Gewebes durch die verschiedenen Elemente der Beschichtung das Gewicht pro Flächeneinheit der Folie nicht zu sehr steigen.

Eine weitere Aufgabe der vorliegenden Erfindung ist es, auf eine an sich bekannte Gewächshausfolienmembran SOLARSHIELD^{®} (Hersteller: PT Carillon) als Capstock eine Schutzfolie aus PMMA-Copolymerisat aufzubringen.

Eine weitere zu lösende Aufgabe der vorliegenden Erfindung besteht darin, den Verbund aus Gewächshausfolienmembran aus HDPE, aus PP oder aus Polyestern (PET) und PMMA-Deckfolie flammfest (B1) auszurüsten. Die Brandschutzausrüstung der erfindungsgemäßen Folie kann sich beispielsweise
a) in dem Capstock
b) in der Gewächshausfolienmembran oder
c) in beiden Teilen
befinden.

Die Aufgabe wird gelöst durch ein Verfahren mit den Merkmalen des vorliegenden Anspruchs 11 und durch einen Kunststoffformkörper nach Anspruch 1. Bevorzugte Ausführungsformen des erfindungsgemäßen Verfahrens können den von Anspruch 11 abhängigen Unteransprüchen entnommen werden. Anspruch 1 schützt die dergestalt hergestellten Verbundwerkstoffe, Anspruch 17 beansprucht deren erfindungsgemäße Verwendungen.

Der erfindungsgemäße Kunststoffformkörper ist aus mehreren Schichten aufgebaut:
➢ **Schicht 1** besteht aus einem olefinischen Polymer oder aus einem Ethylvinylacetat-Polymer oder aus einem Copolymer aus einem Olefin und Ethylvinylacetat,
➢ **Schicht 2** besteht aus einem Gewebe aus verstreckten Fasern aus einem thermoplastischen Polymeren, beispielsweise aus Polyethylen, bevorzugt aus HDPE, aus Polypropylen oder aus Polyester (PET), oder aus einem Polyamid,
➢ Die optionale **Schicht 3** besteht aus einem olefinischen Polymer oder aus einem Ethylvinylacetat-Polymer oder aus einem Copolymer aus einem Olefin und Ethylvinylacetat,
➢ **Schicht 4** besteht aus einem Haftvermittler, im Fall, dass Schicht 1 aus einem olefinischen Polymer besteht, besteht der Haftvermittler auch aus einem olefinischen Polymer, im Fall, dass Schicht 2 aus einem anderen thermoplastischen Polymer besteht, besteht der Haftvermittler aus einem Polymer, das in der Lage ist, ausreichende Haftung zwischen den benachbarten Schichten herzustellen.
➢ **Schicht 5** basiert auf einem Polymethylmethacrylat-Copolymer.

Die Schichten weisen im allgemeinen folgende Dicken auf:
- Schicht 1 zwischen 20 µm und 100 µm,
- Schicht 2 besteht aus einem Gewebe aus verstreckten Fasern, wobei 8 x 8 mm bis 12 x 12 Fasern pro inch (2,54 mm) kommen 1.400 bis 800 demier,
- Schicht 3 zwischen 0 µm und 100 µm,
- Schicht 4 zwischen 2 µm und 100 µm,
- Schicht 5 zwischen 5 µm und 150 µm.

Zusammensetzung der Schichten:
- **Schicht 1** besteht aus einem low density Polyethylen (LDPE), Das in Schicht 1 verwendete LDPE eignet sich ganz besonders zum Extrusionsbeschichten und weist die folgenden beispielhaften Eigenschaften auf:

| **Größe** | **Methode** | **Wert** |
|---|---|---|
| Schmelzflussindex g/10 min | ASTM D1238 | 10,0 |
| Dichte g/cm³ | ASTM D1505 | 0,919 |
| Vicat-Temperatur °C | ASTM D1525 | 83 |
| Schmelzpunkt °C | ASTM D3417 | 105 |
| Streckspannung MPa | ASTM D638 | 90 |
| Bruchspannung MPa | ASTM D638 | 90 |
| Bruchdehnung % | ASTM D638 | 500 |
| Wasserdampfdurchlässigkeit g/m²/24h | ASTM F1249-90 | 17 |

Das Produkt wird unter der Bezeichnung 963 LDPE von der HANWHA Chemical Corp. in den Markt gebracht.
- **Schicht 2** besteht beispielsweise aus einem verstreckten high density Polyethylen-Gewebe (HDPE). Das HDPE-Gewebe in Schicht 2 besteht beispielsweise aus einem Polyethylen mit folgenden Eigenschaften:

| **Größe** | **Methode** | **Wert** |
|---|---|---|
| Dichte kg/m³ | JIS K7112:99 | 951 |
| Schmelzflussindex g/10 min [2,16 kg] | JIS K7210:99 | 0,87 |
| Streckspannung MPa | JIS K7161:94 | 27 |
| nominelle Bruchdehnung % | JIS K7161:94 | 300< |
| E-Modul aus dem Zugversuch MPa | JIS K7161:94 | 1.100 |
| Biegefestigkeit MPa | JIS K7171:94 | 25 |
| Modul im Biegeversuch MPa | JIS K7171:94 | 1.300 |
| Charpy-Schlagzähigkeit kJ/m² | JIS K7111:96 | 11 |
| Durometer Härte | JIS K7215:86 | 66 |
| Wärmeformbeständigkeitstemperatur °C | JIS K7191-1,2:96 | 72 |
| Spannungsrissbeständigkeit h | ASTM D 1693:00 | 25 |

- **Schicht 3** besteht aus
a) einem polaren Copolymer aus EVA und LDPE oder
b) aus EVA oder
c) aus LDPE oder
d) aus Copolymeren aus LDPE und polaren Comonomeren oder
e) aus Copolymeren aus PE und polaren Comonomeren.
Im Fall, dass die Schicht 3 aus einem LDPE besteht, kann das gleiche LDPE wie in Schicht 1 eingesetzt werden. (Fall c))
Im Fall b) besteht Schicht 3 beispielsweise aus einem EthylenVinylacetat-Copolymer mit 18% Vinylacetat-Anteil; ein solches Copolymer wird beispielsweise von der HANWHA Chemical Corp. unter dem Handelsnamen Hanwha Polyethylene 1157 in den Handel gebraucht und weist folgende Eigenschaften auf:

| **Größe** | **Methode** | **Wert** |
|---|---|---|
| Vinylacetatgehalt Gew.-% | HCC Methode | 18,0 |
| Schmelzflussindex q/10 min | ASTM D 1238 | 16 |
| Dichte kg/m³ | ASTM D1505 | 939 |
| Ultimate Tensile Strength kg/cm2 | ASTM D638 | 138 |
| Elongation % | ASTM D638 | 860 |
| Vicat °C | ASTM D1525 | 61 |
| Schmelzpunkt °C | DSC Method | 85 |

- **Schicht 4** besteht aus Copolymeren aus PE und weiteren, polaren Monomeren.
Zusätzlich zu den beschriebenen Maßnahmen kann es von Vorteil sein, zwischen der aufzubringenden Polymethyl(meth)acrylat-basierten Schutzschicht und dem Werkstoff einen oder mehrere Kleber oder Haftvermittler aufzubringen, d.h., dass man schutzschichtseitig den Werkstoff vor Aufbringung der Schutzschicht mit einem Kleber oder Haftvermittler behandelt. Dies ist insbesondere dann notwendig, wenn der zu vergütende Werkstoff nur unzureichend oder überhaupt nicht im Stande ist, chemische Bindungen zur oberflächenvergütenden Polymethyl(meth)acrylatschicht auszubilden. Erfindungsgemäß wird in solchen Fällen als zu vergütender Werkstoff der Ursprungswerkstoff samt Kleber oder Haftvermittler verstanden. Ein solcher Kleber oder Haftvermittler sollte so beschaffen sein, dass er mit der Schutzschicht reaktive Wechselwirkungen dergestalt eingeht, dass möglichst kovalente Bindungen zwischen Schutzschicht und Kleber resultieren.
Derartige Kleber oder Haftvermittler sind im Prinzip dem Fachmann bekannt. Bevorzugte Klebermaterialien werden in Römpp Chemie Lexikon, Georg Thieme Verlag Stuttgart, 9. Auflage, 1990, Band 3, S. 2.252 ff vorgeschlagen. Besonders bevorzugt im Rahmen der Erfindung sind Kleber oder Haftvermittler ausgewählt aus der Gruppe enthaltend Glycidylmethacrylat-modifizierter Polyolefine, z.B. Elvalloy^{®} AS, Fa. Dupont, sowie Ethylen-VinylacetatCopolymere (z.B. Mormelt^{®} 902, Rohm and Haas Co.).
Der Kleber oder Haftvermittler kann mit den üblichen technischen Methoden auf das Gewebe aufgebracht werden. Bevorzugt ist das Verfahren der Extrusionsbeschichtung.
Unter Kleber oder Haftvermittler wird entweder ein lösungsmittelbasierter Kleber verstanden oder ein Stoff, der aufgrund seiner chemischen Funktionalität in der Lage ist, die Haftung zwischen den Schichten zu erhöhen. Beispielsweise werden Glycidylmethacrylat-modifizierte Polyolefine verwendet.
- **Schicht 5** basiert auf einem PMMA-Copolymer folgender Zusammensetzung: aus polymerisierten Monomermischungen a. und b. und gegebenenfalls c,
wobei a. aufweist:
A) 20 bis 100 Gew.-% Methyl(meth)acrylat,
B) 0 bis 80 Gew.-% eines von Methyl(meth)acrylat verschiedenen 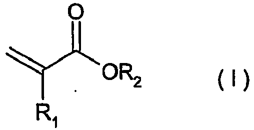 (Meth)acrylats der Formel I,
   worin
   - R₁: für Wasserstoff oder Methyl und
   - R₂: für einen linearen oder verzweigten Alkylrest oder Cycloalkylrest mit 1 bis 18 Kohlenstoffatomen oder für Phenyl oder Naphthyl steht,
C) 0 bis 40 Gew.-% eines weiteren, von a.A) und a.B) verschiedenen, mit diesen jedoch copolymerisierbaren ungesättigten Monomers und
   wobei (a.A) bis (a.C) zusammen 100 Gew.-% ergeben, und zu 100 Gew.-Teilen dieser polymerisierten Mischung werden 0-80 Gew.-Teile weiterer Polymere sowie üblich Zuschläge in Mengen von 0 Gew.-Teilen bis 150 Gew.-Teilen zugegeben;
   und b. aufweist:

A) 20 Gew.-% bis 99 Gew.-% eines Methyl(meth)acrylats der Formel I,
   worin
   - R₁: für Wasserstoff oder Methyl und
   - R₂: für einen linearen oder verzweigten
   Alkylrest oder Cycloalkylrest mit 1 bis 18 Kohlenstoffatomen oder für Phenyl oder Naphthyl steht,
B) 1 Gew.-% bis 80 Gew.-% eines oder mehrerer ethylenisch ungesättigter von b.A) unterschiedlicher mit (b.A) copolymerisierbarer "Reaktiv-Monomere", wobei (b.A) und (b.B) zusammen 100 Gew.-% ergeben und zu 100 Gew.-Teilen dieser polymerisierten Mischung 0 Gew.-% - 80 Gew.-Teile weiterer Polymere sowie übliche Zuschläge in Mengen von 0 Gew.-% bis 150 Gew.-Teilen zugegeben werden
und gegebenenfalls c. aufweist,
wobei c. ein weiteres Polymer sein kann.

Das Gewichtsverhältnis zwischen a. und b. kann zwischen 50:50 und 100:0 liegen, wenn ein Polymer der Gruppe c. vorhanden ist, reduziert sich der Anteil an a. entsprechend.

Wird die Polymethyl(meth)acrylatschicht auf den zu beschichtenden Werkstoff bei Temperaturen aufgebracht, die es erlauben, eine chemische Verbindung der Polymethyl(meth)acrylatschicht mit dem Werkstoff herzustellen, so gelangt man sehr vorteilhaft und überraschenderweise äußerst elegant zur Lösung der gestellten Aufgabe. Das erfindungsgemäße Verfahren erlaubt die Oberflächenvergütung von einer Vielzahl von Werkstoffen ohne Einsatz von Mehrschichtsystemen oder die Verwendung von Klebern, indem die Polymethacrylschicht aus einem Blend von zwei Polymeren auf Poly(meth)acrylatbasis aufgebaut ist, wobei der eine Bestandteil der Oberflächenvergütung die Eigenschaften reinen Polymethyl(meth)acrylats verleiht und der andere Teil das entsprechende Mittel zur Anbindung dieser Schicht an das Substrat bereithält. Die Ausbildung der aktiven chemischen Vernetzung der Polymerschicht mit dem Substrat erfolgt dabei durch die erhöhte Temperatur beim Vergütungsprozess, wobei neben dem Aufbau chemischer Bindungen auch eine gewisse Interpenetration von Substrat und Polymerschicht (insbesondere bei porösen, rauhen oder faserigen Substratmaterialien) haftungsunterstützend wirken kann.

Die Komponente a.A) ist eine essentielle Komponente. Es handelt sich um Methyl(meth)acrylat, welches 20 Gew.-% bis 100 Gewichtsprozente der polymerisierbaren Mischung a. ausmacht, aus welchen die Polymerschicht erhältlich ist. Falls ihr Anteil 100 Gewichtsprozent ausmacht handelt es sich bei dieser Mischung um PMMA-Homopolymeres. Ist der Anteil geringer als 100 Gewichtsprozent, liegt ein Co- oder Terpolymer aus 3 oder mehr Monomersorten vor. Die polymerisierte Mischung a. ist dann ein Co- oder Terpolymerisat.

Die Komponente a.B) ist dementsprechend optional. Es handelt sich um einen Acrylsäure- oder Methacrylsäureester, welcher vom Methylmethacrylat verschieden ist. Unter linearen oder verzweigtem (C₁-C₁₈)-Alkylrest versteht sich ein Umfang an Alkylresten, der angefangen bei Methyl- über Ethyl- bis hin zu einem 18-C-Atome umfassenden Radikal reicht. Mitumfasst sind auch sämtliche Bindungsisomere, welche innerhalb der Gruppe denkbar sind. Besonders genannt seien das Butylmethacrylat, 2-Ethylhexylmethacrylat, Cyclohexylmethacrylat, Phenylmethacrylat sowie das Naphthylmethacrylat.

Bevorzugt werden in den Mischungen a.B) (Meth)acrylate eingesetzt, worin der Rest R₂ des (Meth)acrylats der Formel I einen linearen oder verzweigten (C₁-C₈)-Alkylrest umfasst. Hiervon wiederum sind der Methyl-, Ethyl- oder n-Butylrest für R₂ besonders geeignet.

Die Schreibweise "(Meth)acrylat" bedeutet im Rahmen der Erfindung Acrylat und/oder Methacrylat.

Die polymerisierbare Komponente a.C) zum Erhalt der Polymethyl(meth)acrylatschicht ist optional. Unter von a.A) und a.B) verschiedenen Monomeren versteht der Fachmann z.B. Styrol und seine Derivate, Vinylester wie z. B. Vinylacetat, Vinylpropionat, Vinylester höherer Alkylsäuren, Vinylchlorid, Vinylfluorid, Olefine wie z. B. Ethen, Propen, Isobuten und dergleichen.

Weiterhin enthalten die polymerisierten Mischungen a. bzw. b. gewöhnlich noch an sich bekannte Zuschläge in Mengen bis zu 150 Gew.-Teilen (pro 100 Gew.-Teile a.A) - a.C) bzw. b.A) und b.B)). Genannt seien beispielsweise Calciumcarbonat (Kreide), Titandioxid, Titandioxid, Calciumoxid, Perlit, gefällte und gecoatete Kreiden als rheologisch wirksame Additive, ferner ggf. Thixotropierungsmittel wie z. B. pyrogene Kieselsäure. Die Korngröße liegt meist im Bereich 5 bis 25 µm. Die Mischung a. bzw. b. kann anwendungsbedingt noch an sich bekannte Hilfsstoffe wie Haftvermittler, Netzmittel, Stabilisatoren, Verlaufsmittel, Treibmittel in Anteilen von 0 Gew.-% bis 5 Gew.-% (bezogen auf die Mischungen a.A) bis a.C) bzw. b.A) und b.B)) enthalten. Erwähnt sei z. B. Calciumstearat als Fließhilfsmittel.

Der Vollständigkeit halber sei erwähnt, dass den polymerisierten Mischungen a. und/oder b. auch weitere Komponenten bzw. Polymere c. wie Schlagzähmodifikatoren und schlagzäh-modifizierte PMMA-Formmassen zugemischt sein können (DE38 42 796 und DE19 813 001). Vorzugsweise enthalten die polymeren Mischungen a. und/oder b. auch weitere in technischen Prozessen verwendete Polymere, welche u. a. ausgewählt sein können aus der Gruppe der Polyvinylidendifluoride (PVDF), PVC, Polyethylene, Polypropylen, Polyester, Polyamide. Ganz besonders bevorzugt ist der Einsatz von Vinylidenfluorid-basierenden Fluorpolymeren in diesem Zusammenhang (WO 00/37237). Wenn ein Polymer der Gruppe c. vorhanden ist, reduziert sich der Anteil an a. entsprechend, in besonderen Ausführungsformen kann a. auch komplett durch c ersetzt werden.

Die Komponente b.A) umfasst die Summe der Komponenten a.A) und a.B).

Die Komponente b.B) in der Mischung b. ist ein "Reaktiv-Monomer", das haftungsverbessernde Eigenschaften besitzt. Unter den haftungsverbessernden Monomeren (Reaktiv-Monomere) als Bestandteile der Polymethyl(meth)acrylate seien solche radikalisch polymerisierbaren Monomeren verstanden, welche funktionelle Gruppen besitzen, die mit den Materialien, die beschichtet werden sollen, in Wechselwirkung treten können. Eine derartige Wechselwirkung soll zumindest durch eine chemische (kovalente) Bindung bedingt sein. Sie kann zudem z. B. durch Wasserstoffbrückenbildung, Komplexierung, Dipolkräfte oder thermodynamische Verträglichkeit (Verschlingen der Polymerketten) u. ä. unterstützt werden. An diesen Wechselwirkungen sind in der Regel Heteroatome wie Stickstoff oder Sauerstoff beteiligt. Genannt seien als funktionale Gruppen die Amino-, insbesondere die Dialkylamino-, (cyclische) Amid-, Imid-, Hydroxyl-, (Ep)oxy-, Carboxyl-, (Iso)Cyano-Gruppe.

Derartige Monomere sind an sich bekannt (vgl. H. Rauch Puntigam, Th. Völker, Acryl- und Methacrylverbindungen, Springer-Verlag 1967; Kirk-Othmer, Encyclopedia of Chemical Technology, 3rd. Ed., Vol. 1, pp. 394-400, J. Wiley 1978; DE-A 25 56 080; DE-A 26 34 003).

Vorzugsweise gehören die haftungsverbessemden Monomeren daher der Monomerklasse der stickstoffhaltigen Vinylheterocyclen mit vorzugsweise 5-Ringen neben 6-Ringen, und/oder der copolymerisierbaren vinylischen Carbonsäuren und/oder der Hydroxyalkyl-, Alkoxyalkyl-, Epoxy- und der Aminoalkyl-substituierten Ester oder Amiden der Fumar- oder Malein- bzw. Itacon- oder Acryl- und Methacrylsäure an.

Als Stickstoff-heterocyclische Monomere seien insbesondere solche aus der Klasse der Vinylimidazole, der Vinyllactame, der Vinylcarbazole und der Vinylpyridine genannt. Beispiele, die keinerlei Beschränkung darstellen sollen, für diese monomeren Imidazolverbindungen sind N-Vinyl-imidazol (auch Vinyl-1-imidazol genannt), N-Vinyl-methyl-2-imidazol, N-Vinyl-ethyl-2-imidazol, N-Vinyl-phenyl-2-imidazol, N-Vinyl-dimethyl-2,4-imidazol, N-Vinyl-benzimidazol, N-Vinylimidazolin (auch Vinyl-1-imidazolin genannt), N-Vinyl-methyl-2-imidazolin, N-Vinyl-phenyl-2-imidazolin und Vinyl-2-imidazol.

Als Beispiele für Monomere, die sich von den Lactamen ableiten, lassen sich insbesondere Verbindungen wie die folgenden anführen: N-Vinylpyrrolidon, N-Vinylmethyl-5-pyrrolidon, N-Vinylmethyl-3-pyrrolidon, N-Vinyläthyl-5-pyrrolidon, N-Vinyldimethyl-5,5-pyrrolidon, N-Vinylphenyl-5-pyrrolidon, N-Allylpyrrolidon, N-Vinylthiopyrrolidon, N-Vinylpiperidon, N-Vinyldiäthyl-6,6-piperidon, N-Vinylcaprolactam, N-Vinylmethyl-7-caprolactam, N-Vinyläthyl-7-caprolactam, N-Vinyldimethyl-7,7-caprolactam, N-Allylcaprolactam, N-Vinylcapryllactam.

Unter den Monomeren, die sich vom Carbazol ableiten, lassen sich insbesondere anführen: N-Vinylcarbazol, N-Allylcarbazol, N-Butenylcarbazol, N-Hexenylcarbazol und N-(Methyl-1-ethylen)Carbazol. Unter den copolymerisierbaren vinylischen Carbonsäuren seien insbesondere die Maleinsäure, Fumarsäure, Itaconsäure bzw. geeignete Salze, Ester oder Amide derselben genannt.

Ferner seien die folgenden epoxy-, oxy- bzw. alkoxysubstituierten Alkylester der (Meth)acrylsäure angeführt: Glycidylmethacrylat, 2-Hydroxyethyl(meth)acrylat, Hydroxypropyl(meth)acrylat, 2-Methoxy-ethyl(meth)acrylat, 2-Ethoxyethyl(meth)acrylat, 2-Butoxyethyl(meth)acrylat, 2-(2-Butoxyethoxy)ethylmeth-acrylat, 2-(Ethoxyethyloxy)ethyl(meth)acrylat, 4-Hydroxybutyl(meth)acrylat, 2-[2-(2-Ethoxy-ethoxy)ethoxy]-ethyl(meth)acrylat, 3-Methoxybutyl-1-(meth)acrylat, 2-Alkoxymethylethyl(meth)acrylat, 2-Hexoxyethyl(meth)acrylat.

Weiterhin seien die folgenden aminsubstituierten Alkylester der (Meth)acrylsäure genannt: 2-Dimethylaminoethyl(meth)acrylat, 2-Diethylaminoethyl-(meth)acrylat, 3-Dimethylamino-2,2-dimethylpropyl-1-(meth)acrylat, 3-Dimethylamino-2,2-dimethylpropyl-1-(meth)acrylat, 2-Morpholinoethyl(meth)-acrylat, 2-tert.-Butylaminoethyl(meth)acrylat, 3-(Dimethylamino)propyl-(meth)acrylat, 2-(Dimethylaminoethoxyethyl)-(meth)acrylat.

Als Vertreter der (Meth)acrylamide seien beispielsweise die folgenden Monomeren genannt: N-Methyl(meth)acrylamid, N-Dimethylaminoethyl(meth)-acrylamid, N-Dimethylaminopropyl(meth)acrylamid, N-Isopropyl(meth)acrylamid, N-tert.-Butyl(meth)acrylamid, N-Isobutyl(meth)acrylamid, N-Decyl(meth)acrylamid, N-Cyclohexyl(meth)acrylamid, N-[3-(Dimethylamino)2,2-dimethylpropyl]-methacrylamid, N-[2-Hydroxyethyl](meth)-acrylamid.

Vorteilhafterweise werden "Reaktiv-Monomere" ausgewählt aus der Gruppe enthaltend GMA (Glycidylmethacrylat), Maleinsäurederivate, wie beispielsweise Maleinsäure, Maleinsäureanhydrid (MSA), Methylmaleinsäureanhydrid, Maleinimid, Methylmaleinimid, Maleinsäureamide (MSA), Phenylmaleinimid und Cyclohexylmaleinimid, Fumarsäurederivate, Methacrylsäureanhydrid, wird Acrylsäureanhydrid in der Mischung b. eingesetzt.

Das Verhältnis der polymerisierten Monomermischungen a. und b. in der Polymethyl(meth)acrylat-basierten Oberflächenvergütung kann vom Fachmann beliebig und angepasst auf den zu schützenden Untergrund gewählt werden. Im Allgemeinen wird die Komponente a. in der polymerisierten Schicht aus Kostengründen im Überschuss vorhanden sein. Bevorzugt ist der Einsatz von 50 Gew.-% - 100 Gew.-% der polymerisierten Mischung a. im Vergleich zu b. Besonders bevorzugt sollte das Verhältnis a. : b. bei 60 Gew.-% - 90 Gew.-%: 40 Gew.-%- 10 Gew.-% Gew.-% liegen. Ganz besonders bevorzugt wird eine Mischung der Polymeren a. zu b. von 75 Gew.-%- 85 Gew.-% zu 25 Gew.-% - 15 Gew.-% herangezogen.

Im Folgenden ist die Zusammensetzung weiterhin bevorzugter Polymerschichten dargestellt:
a.A: 20 Gew.-%, -100 Gew.-%, bevorzugt 30 Gew.-% - 100 Gew.-%, besonders bevorzugt 40 Gew.-% - 99 Gew.-%
a.B: 0 Gew.-% - 80 Gew.-%, bevorzugt 0 Gew.-% - 70 Gew.-%, besonders bevorzugt 1 Gew.-, - 60 Gew.-%
a.C: 0 Gew.-% - 40 Gew.-%, bevorzugt 0 Gew.-% - 35 Gew.-%, besonders bevorzugt 0 Gew.-% - 32 Gew.-%,
Zuschlagsstoffe zu a.: 0 Gew.-Teile -150 Gew.-Teile, vorzugsweise 0 Gew.-Teile -100 Gew.-Teile, besonders bevorzugt 0 Gew.-Teile - 50 Gew.-Teile.
b.A: 20 Gew.-% - 99 Gew.-%, bevorzugt 30 Gew.-% - 99 Gew.-%, besonders bevorzugt 40 Gew.-% - 98 Gew.-%
b.B: 1 Gew.-% - 80 Gew.-%, bevorzugt 1 Gew.-% - 70 Gew.-%, besonders bevorzugt 2 Gew.-% - 60 Gew.-%
Zuschlagsstoffe zu b.: 1 Gew.-Teile -150 Gew.-Teile, vorzugsweise 0 Gew.-Teile -100 Gew.-Teile, besonders bevorzugt 0 Gew.-Teile - 50 Gew.-Teile.

Als weitere Zuschlagstoffe können auch UV-Absorber verwendet werden. Eine verbesserte Witterungsbeständigkeit der erfindungsgemäßen Beschichtung wird durch eingearbeitete UV-Schutzmittel, wie sie als Zusätze zu Kunststoffen bekannt sind und in Ullmanns Enzyklopädie der technischen Chemie, 4. Auflage, Band 15, Seiten 253 bis 260, aufgeführt sind und/oder durch polymerisierbare UV-Stabilisatoren erreicht. Als Beispiel für polymerisierbare UV-Stabilisatoren sei 3-(2-Benzotriazolyl)-2-hydroxy-5-tert.-octylbenzylmethacrylamid genannt. Vorteilhafterweise setzen wir Triazinbasierende UV-Absorber ein (z.B. CGX UVA 006 von Ciba), welche eine hohe UV-Eigenbeständigkeit besitzen und somit der Folienmembran die geforderte Langzeitstabilität verleihen. UV- Absorber können z. B. in Mengen von 0,1 bis 10 Gew.-%, bezogen auf das Polymer, enthalten sein.

Die hohe UV-Beständigkeit bleibt auch bei langandauernder Strahlungseinwirkung erhalten, wenn der Kunststoff eine geringe Menge eines sterisch gehinderten Amins enthält. Entsprechende Verbindungen fangen Radikale ab, die sich bei Strahlenbelastung bilden und die sonst das Kunststoffmaterial langsam zerstören würden. Solche Zusätze sind in der japanischen Patentschrift JP 03 47,856 beschrieben und werden als "hindered amine light stabilizers", abgekürzt "HALS" bezeichnet.

Als UV-Absorber können beispielsweise die Produkte CGX UVA 006 oder Tinuvin 328 (Ciba) verwendet werden, als HALS werden die Produkte Chimassorb 119 FL oder Tinuvin 770 verwendet. (Hersteller: Ciba SC)

Als weitere Zuschlagstoffe können auch Flammschutzmittel verwendet werden. Flammschutzmittel und/oder flammhemmende Additive sind dem Fachmann bekannt. Sie bezeichnen solche anorganischen und/oder organischen Stoffe, die insbesondere Holz und Holzwerkstoffe, Kunststoffe oder Textilien flammfest machen (flammhemmend ausrüsten) sollen. Sie erreichen dies, indem sie die Entflammung der zu schützenden Stoffe verhindern und die Verbrennung erschweren.

Unter anderem umfassen Flammschutzmittel und/oder flammhemmende Additive Stoffe, die feuererstickend, verkohlungsfördernd, sperrschicht-und/oder dämmschichtbildend wirken. Dazu gehören unter anderem spezielle anorganische Verbindungen, wie Aluminiumoxidhydrate, Aluminiumhydroxide, Wasserglas, Borate, insbesondere Zinkborate, Antimonoxid (meist zusammen mit organischen Halogen-Verbindungen), Ammoniumphosphate, wie (NH₄)₂HPO₄, und Ammoniumpolyphosphate.

Weitere einsetzbare Flammschutzmittel und/oder flammhemmende Additive umfassen halogenierte organische Verbindungen, wie beispielsweise Chlorparaffine, Hexabrombenzol, bromierte Diphenylether und andere BromVerbindungen, organische Phosphor-Verbindungen, vor allem Phosphate, Phosphite und Phosphonate, insbesondere solche mit Weichmacher-Wirkung, wie Tris-kresylphosphat, halogenierte organische Phosphor-Verbindungen, wie Tri(2,3-dibrompropyl)-phosphat oder Tris-(2-brom-4-methylphenyl)-phosphat. Darüber hinaus gehören zu den einsetzbaren Flammschutzmitteln und/oder flammhemmenden Additiven auch solche Substanzen, die sich beim Erwärmen schaumig aufblähen, ab 250°C bis 300°C verkohlen, sich dabei verfestigen und ein feinporiges, gut isolierendes Polster bilden; wie beispielsweise Gemische aus Harnstoff, Dicyandiamid, Melamin und organischen Phosphaten.

Vorzugsweise werden solche Flammschutzmittel und/oder flammhemmende Additive bevorzugt, die im Falle eines Brandes keine umweltgefährdenden Stoffe, wie toxische Phosphate und hochtoxische Dioxine bilden.

Die angesprochenen Polymermischungen können nach dem Fachmann bekannten Methoden einzeln polymerisiert, vermengt und abschließend zur Oberflächenvergütung verwendet werden. Die Aufbringung der so hergestellten Polymerschicht auf das Substrat kann wiederum nach dem Fachmann bekannter Art und Weise erfolgen, wobei jedoch zur ausreichenden Ausbildung der kovalenten Oberflächenbindungen bzw. anderer Haftungsmechanismen und der Interpenetration der Oberflächenpolymerstränge in das Substrat eine ausreichende Temperatur eingestellt wird. Diese liegt in der Regel oberhalb der Glastemperatur der aufzubringenden Polymerschicht. Insbesondere ist es vorteilhaft, wenn diese Temperatur signifikant oberhalb der Glastemperatur (T_{G}) eingestellt wird, d.h. eine Temperatur von >T_{G} + 20°C, besonders bevorzugt von >T_{G} +50°C und ganz besonders bevorzugt von >T_{G} +80°C.

Bevorzugte Verfahren zum Aufbringen der Oberflächenvergütung können dem allgemeinen Fachwissen entnommen werden (Henson, Plastics Extrusion Technology, Hanser Publishers, 2nd Edition, 1997). Bevorzugte Aufbringungsverfahren der Polymethyl(meth)acrylatschicht in Form einer Schmelze sind u.a. das Coextrusionsbeschichten oder das Schmelzbeschichten. Für das Aufbringen der Oberflächenvergütung in Form einer Folie kann die Lamination, die Extrusions-Kaschierung, das Verkleben, Coil-Coating, Ummantelung oder die Hochdrucklamination durchgeführt werden. Weitere Beschreibungen zum Herstellungsverfahren findet der Fachmann in "Kunststoffverarbeitung" von Schwarz, Ebeling und Furth, Vogel-Verlag, Seite 33, 9. Auflage, (2002) unter dem Stichwort "Extrusionsbeschichtung" sowie in den "Reifenhäuser News", Issue 30 (06/2004).

Eine weitere Verfahrensvariante zur Herstellung des erfindungsgemäßen Kunststoffs besteht darin, dass man auf die eine Seite des Kunststoffformkörpers (Schicht 2) eine erste Schicht aus einem weiteren Kunststoff aufbringt (Schicht 1) und in einem zweiten, vorzugsweise gleichzeitig mit dem ersten durchzuführenden Schritt auf die andere Seite des Kunststoffformkörpers einen Schmelzefilm, bestehend aus den Schichten 4 und 5 als Coextrudat aufbringt.

In einer weiteren Ausgestaltung der Erfindung beschäftigt sich diese mit den erfindungsgemäß hergestellten Verbundwerkstoffen. Prinzipiell können die Polymerschichten erfindungsgemäß auf alle, dem Fachmann für diesen Zweck in Frage kommende Werkstoffe aufgebracht werden. Als bevorzugt auszuwählende Materialien kommen in Betracht: Holz, Holzfurnier, Papier, andere Polymermaterialien wie Polyolefine, Polystyrole, Polyvinyle, Polyester, Polyamide, künstlicher oder natürlicher Kautschuke, Metalle, duroplastische Materialien wie Hochdruckpressstoffplatten.

Die Substratmaterialien können als Folie, Folienzuschnitt, Platte oder Plattenzuschnitt vorliegen. In diesem Zusammenhang besonders hervorzuheben sind Substratmaterialien wie Polyethylen- oder Polypropylen-Gewebe, welche z.B. in der Foliengewächshausindustrie eingesetzt werden. Für die Erfindung besonders bevorzugte Materialien sind beispielsweise Gewächshausfolienmembranen, die aus einem HDPE-Fadengeflecht bestehen. Die einzelnen Fäden sind verstreckt, so dass sich in Belastungsrichtung der Fäden hohe Festigkeiten ergeben. Das Fadengeflecht ist optional beidseitig mit LDPE beschichtet.

Die Gewächshausfolienmembranen der Firma PT Carillon werden unter der Bezeichnung SOLARSHIELD^{®} in den Handel gebracht.

Die Untersuchung der erfindungsgemäßen Folienverbunde und der Vergleichsproben erfolgte nach folgenden Methoden:
➢ Zugversuch: 23°C/50%r.F, ISO 527-3/2/100
➢ Weiterreißversuch: 23°C/50%r.F., ASTM D 1938, 23°C, Prüfgeschwindigkeit 100mm/min
➢ Transmissions-Spektrum τ(λ) mit Wellenlänge 250nm:≤λ≤ 2.500nm:
   Messung der totalen Transmission mittels Zweistrahl-Spektralphotometer mit Integrationskugel wie in ISO 13468-2 beschrieben. Die der Sonne zugewandte Seite der Folie ist bei der Messung der Lichtquelle zugewandt.
➢ Lichttransmissionsgrad τ_{D65}: aus τ(λ) mit 380 nm ≤ λ ≤ 780 nm gemäß ISO 13468-2.
> Solartransmissionsgrad: solar transmittance nach ASTM E903-96, berechnet für direct normal solar spectral irradiance at air mass 1.5 aus dem Transmissionsspektrum τ(λ) mit Wellenlänge 300 nm ≤ λ ≤ 2.500 nm.
➢ Transmissions-Spektrum von 2,5 µm bis 25 µm Wellenlänge: Zur Messung des Transmissionsspektrums im mittleren Infrarot (2,5 µm bis 25 µm) wurde das FT-IR-Spektrometer Nicolet Magna 550 mit DTGS-Detektor bei einer Auflösung von 4 Wellenzahlen eingesetzt. Nach der Aufnahme eines Backgroundspektrums der leeren Kammer wird die Folie in den Strahlengang gebracht. Im Transmissionsmodus werden 4 Interferogramme acquiriert. Nach Fouriertransformation und ggf. Basisliniensubtraktion erhält man die Transmission in Abhängigkeit von der Wellenzahl. Die Wellenlänge ist der Kehrwert der Wellenzahl.
➢ Schnellbewitterung im Gerät "Xenotest Alpha" der Fa. Atlas mit folgenden Parametern: Bestrahlungsstärke 180±9 W/m² zwischen 300-400 nm Wellenlänge, Grenzwellenlänge 300 nm, Prüfzyklus: 102 min Strahlung, 18 min Strahlung mit künstlicher Beregnung, Gleichlauf, Schwarzstandard-Temperatur 65±3°C, Probenraum-Temperatur: 36±4°C, relative Luftfeuchtigkeit: 65±10%. Die Bewitterungsdauer beträgt 5.419h. Dies entspricht unter den genannten Bedingungen näherungsweise etwa 15 bis 20 Jahren Freibewitterung in Darmstadt.

Alle Proben wurden so entnommen, dass die beiden senkrechten Hauptrichtungen der Stränge des PE-Gewebes parallel zu den äußeren Dimensionen der Probekörper lagen. Für Zugversuch, Weiterreißversuch, Kriechversuch lag die Belastungsrichtung parallel zur Extrusionsrichtung.

### Beispiel 1

Gewächshausfolie der Fa. PT Carillon (PE-HD-Gewebe als Schicht 2 + beide Seiten mit PE-LD beschichtet, Schichten 1 und 3), (Schicht 1: 65 µm, Schicht 2: 96 g/m²≈ 120 µm, Schicht 3: 55 µm)
Gesamtdicke 0,24mm

### Eigenschaften:

| | |
|---|---|
| Zugversuch - Zugfestigkeit [MPa] | 79,5 |
| Zugversuch - Bruchdehnung [%] | 35 |
| Weiterreißversuch - mittlere Weiterreißkraft [N] | 52,5 |
| Lichtransmissionsgrad τ_{D65} [%] | 82,0 |
| Transmissionsspektrum 250 nm bis 2.500 nm | Abb.1.a |
| Transmissionsspektrum 2,5 µm bis 25 µm | Abb.1.b |
| Lichttransmissionsgrad τ_{D65} nach 5.419h Schnellbewitterunq [%] | 75,1 |

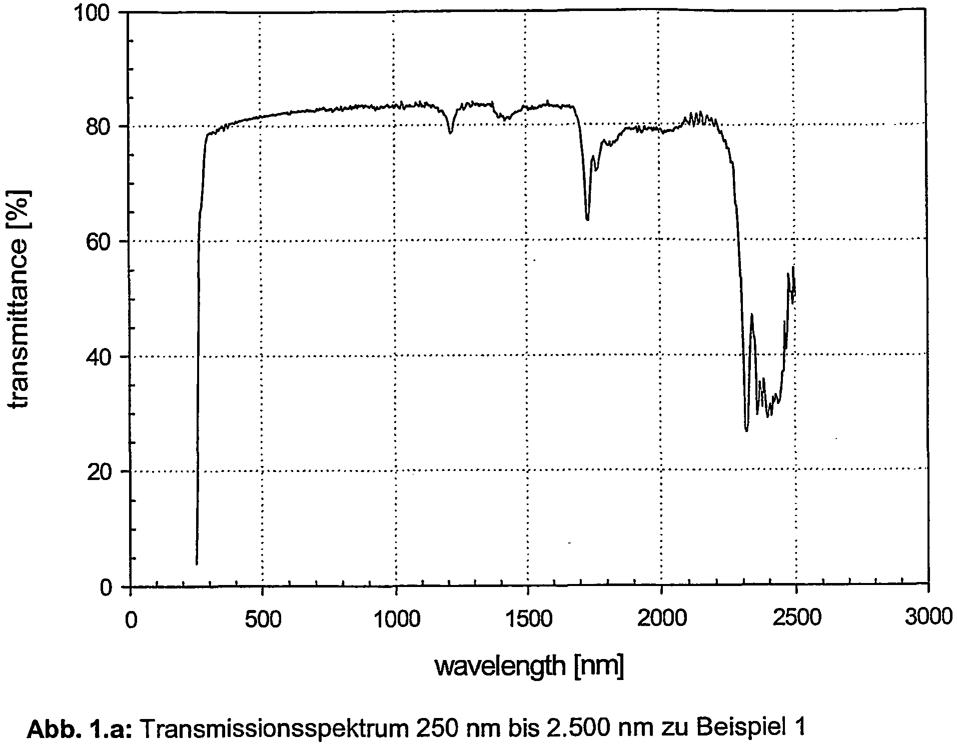

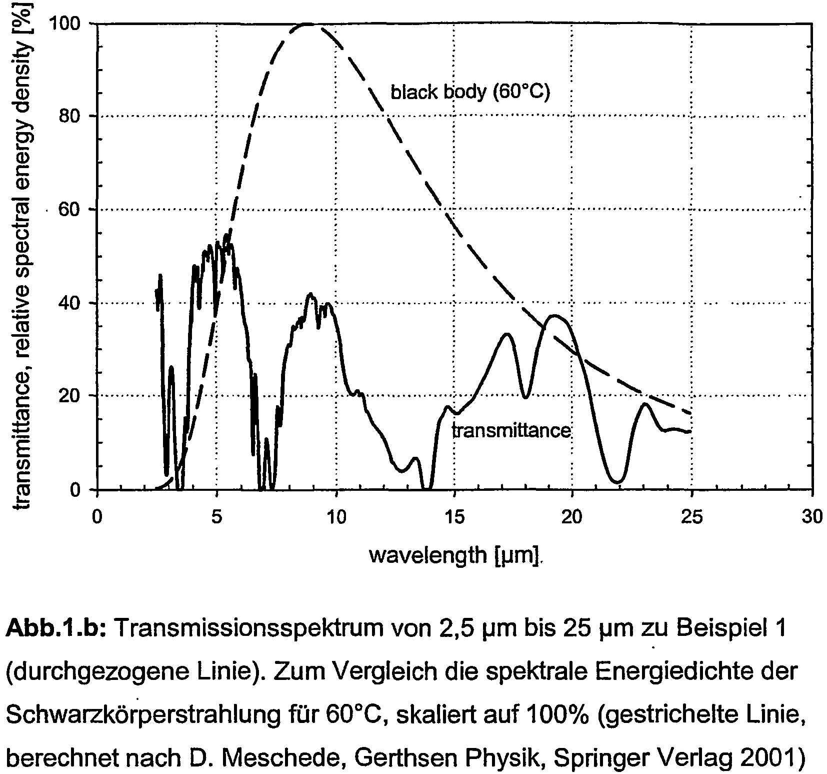

### Ergebnis:

Das PE Gewebe hat einen hohen Lichttransmissionsgrad sowie eine gute Durchlässigkeit für die Strahlung der Sonne. Der Lichttransmissionsgrad nimmt während der Schnellbewitterung unter den genannten Bedingungen jedoch um rund 7% ab.

Das PE-Gewebe lässt jedoch einen großen Teil der vom Boden abgestrahlten Wärme passieren. Betrachtet man nämlich den Boden als schwarzen Strahler mit einer Temperatur von 60°C, so ergibt sich das in Abb.1.b gestrichelt gezeichnete Emissionsspektrum. Danach liegt das Maximum der Emission bei rund 9 µm Wellenlänge, der Wellenlängenbereich mit mindestens 50% der maximalen Energiedichte reicht von etwa 6 µm bis etwa 16 µm, Ein lokales Maximum des Transmissionsgrades des Gewebes (von rund 40%) bei 9 µm Wellenlänge fällt mit dem Maximum des Emissionsspektrums des Bodens zusammen.

Die Strahlung der Sonne wird also gut durchgelassen (≈80%), die Wärmeabstrahlung des von ihr aufgewärmten Bodens kann das PE-Gewebe jedoch zu einem erheblichen Teil wieder passieren (≈40% bei der Wellenlänge mit maximaler Emission) und ist damit verloren.

### Beispiel 2

Gewebe aus Beispiel 1 / Haftvermittler: Bynel 22 E 780 der Fa. DuPont/mod. PMMA. Das PMMA ist ein Gemisch aus 58 Gewichtsteilen Plex 8745 F und 40 Gewichtsteilen Reaktivmodifier und 2 Gewichtsteilen Tinuvin 360. (Hersteller: Ciba) Das Produkt Plex 8745 F ist bei der Röhm GmbH & Co. KG erhältlich. Der Reaktivmodifier ist ein Copolymer aus Methylmethacrylat, Methylacrylat und Methacrylsäure in Gewichtsverhältnis 88:4:8.
Coextrusionsbeschichtung
Gesamtdicke 0,32mm

Der Einsatz der Coextrusionsbeschichtungstechnologie (PMMA und Haftvermittler werden bereits im Extrusionswerkzeug in Verbindung gebracht und werden gemeinsam als Schmelzefilm auf das zu beschichtende Substrat aufgetragen) bringt im Vergleich zur Laminations-/Extrusionskaschiertechnologie (Beispiel 3) eine deutlich erhöhte Haftung zwischen Gewebe und PMMA.

### Eigenschaften

| | |
|---|---|
| Zugversuch - Zugfestigkeit [MPa] | 63,2 |
| Zugversuch - Bruchdehnung [%] | 28 |
| Weiterreißversuch - mittlere Weiterreißkraft [N] | 31,9 |
| Lichtransmissionsgrad τ_{D65} [%] | 81,91 |
| Transmissionsspektrum 250 nm bis 2.500 nm | Abb.2.a |
| Transmissionsspektrum 2,5 µm bis 25 µm | Abb.2.b |
| Solartransmissionsgrad [%] | 79,25 |
| Lichttransmissionsgrad τ_{D65} nach 5.419h Schnellbewitterung | 80,8 |

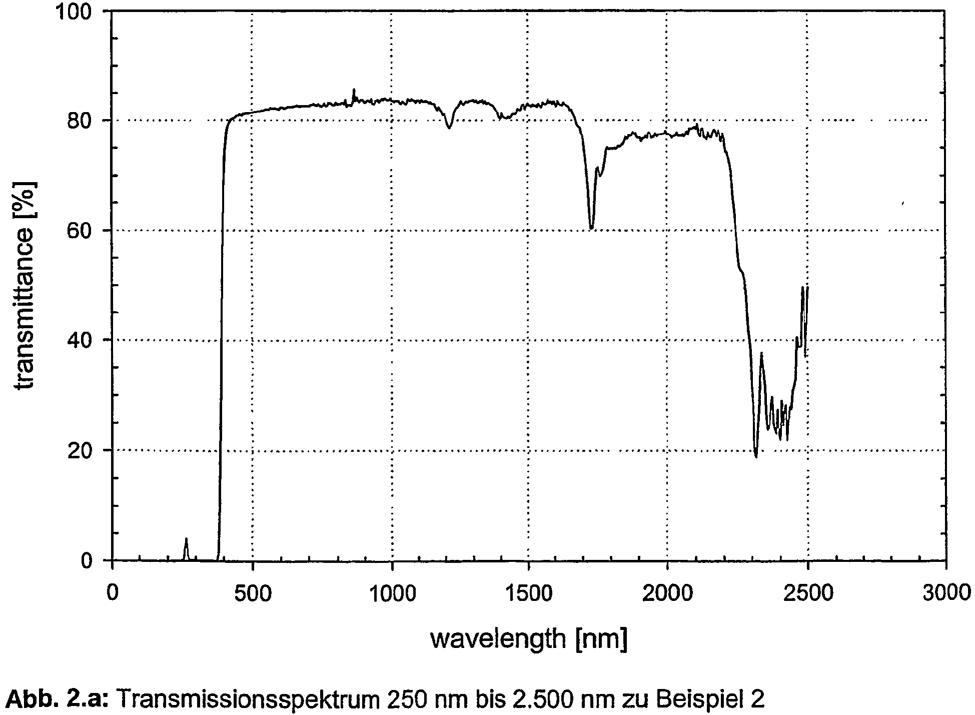

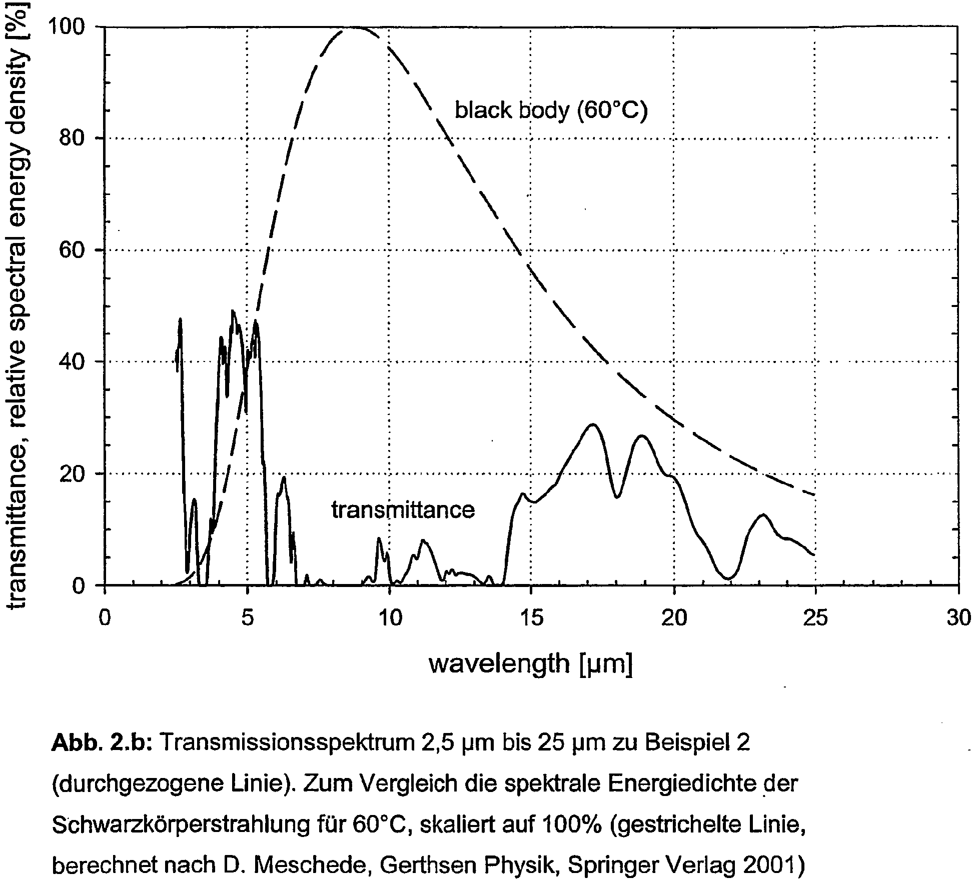

### Ergebnis:

Dieser Folienverbund zeigt gegenüber dem Gewebe aus Beispiel 1 einen hohen Lichttransmissionsgrad sowie eine gute Durchlässigkeit für die Strahlung der Sonne. Solartransmissionsgrad und Lichttransmissionsgrad betragen rund 80%. Der Lichttransmissionsgrad nimmt bei der Schnellbewitterung unter den genannten Bedingungen nur um gut 1 % ab, also um deutlich weniger als im Vergleichsbeispiel 1 des reinen PE-Gewebes. Das Aufbringen der PMMA-Schicht führt damit zu einer deutlichen Steigerung der Lebensdauer des Materials.

Ferner zeigt dieser Folienverbund überraschenderweise und im Gegensatz zum PE-Gewebe aus Beispiel 1 für die vom Boden abgestrahlte Wärmestrahlung einen nur geringen Transmissionsgrad. Notwendig für diesen Effekt ist die PMMA-Schicht. Betrachtet man den Boden als schwarzen Strahler mit einer Temperatur von 60°C, so ergibt sich das in Abb. 2.b gestrichelt gezeichnete Emissionsspektrum. Danach liegt das Maximum der Emission bei rund 9 µm Wellenlänge, der Wellenlängenbereich mit mindestens 50% der maximalen Energiedichte reicht von etwa 6 µm bis etwa 16 µm. In diesem Wellenlängenbereich hoher Wärmeabstrahlung beträgt der spektrale Transmissionsgrad des Folienverbunds maximal 20%, im Durchschnitt unter 10%.

Die Strahlung der Sonne wird also gut durchgelassen (≈80%), die Wärmeabstrahlung des von ihr aufgewärmten Bodens kann den Folienverbund nicht wieder passieren (≈10%). Dies ist gegenüber dem reinen PE-Gewebe ein Vorteil, welches bei 9µm Wellenlänge rund 40% der Wärmestrahlung wieder entweichen lässt, wie im Beispiel 1 gezeigt. Der Folienverbund aus Beispiel 2 zeigt wie das PE-Gewebe aus Beispiel 1 gute mechanische Eigenschaften im Sinne von zähem Verhalten bei hoher Zugfestigkeit und hoher Weiterreisskraft.

### Beispiel 3

Gewebe aus Beispiel 1 / Haftvermittler MORMELT 902 von Rohm&Haas/mod. PMMA - Lamination. Das PMMA ist ein Gemisch aus 58 Gewichtsteilen Plex 8745 F und 40 Gewichtsteilen Reaktivmodifier und 2 Gewichtsteilen Tinuvin 360. (Hersteller: Ciba) Das Produkt Plex 8745 F ist bei der Röhm GmbH & Co. KG erhältlich. Der Reaktivmodifier ist ein Copolymer aus Methylmethacrylat, Methylacrylat und Methacrylsäure im Gewichtsverhältnis 88:4:8.
Gesamtdicke 0,42mm

Die Verwendung der Laminationstechnologie (PMMA wird als Folie mit dem schmelzeförmigen Haftvermittler in Verbindung gebracht) führt im Vergleich zur Coextrusionsbeschichtung zu deutlich schlechterer Haftung der PMMA-Schicht.

### Eigenschaften

| | |
|---|---|
| Zugversuch - Zugfestigkeit [MPa] | 48,4 |
| Zugversuch - Bruchdehnung [%] | 25 |
| Weiterreißversuch - mittlere Weiterreißkraft [N] | 60,7 |
| Lichtransmissionsgrad τ_{D65} [%] | 80,3 |
| 250 nm bis 2.500 nm | Abb.3 |

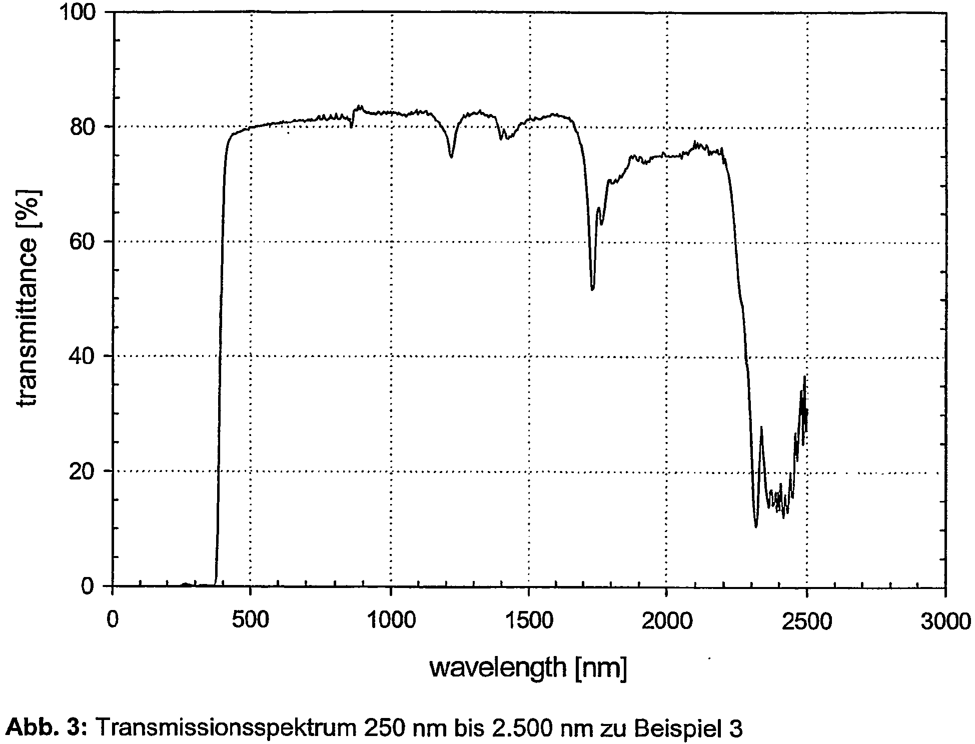

### Ergebnis:

Der Folienverbund zeigt gegenüber dem PE Gewebe aus Beispiel 1 einen unverändert hohen Lichttransmissionsgrad sowie ebenso eine gute Durchlässigkeit für die Strahlung der Sonne. Die Absorption im UV-Bereich ist prinzipiell eine Funktion der eingesetzten UV-Absorber und deren Konzentration und kann in weiten Grenzen eingestellt werden.

Der Folienverbund zeigt wie das PE Gewebe gute mechanische Eigenschaften, im Sinne von zähem Verhalten bei hoher Zugfestigkeit und Weiterreißkraft.

### Beispiel 4

Gewächshausfolie der Fa. PT Carillon (PE-HD-Gewebe + eine Seite mit PE-LD beschichtet) / Haftvermittler Bynel 22 E 780 der Firma DuPont/mod. PMMA-PVDF. Das PMMA - PVDF ist ein Gemisch aus 58,5 Gewichtsteilen PVDF, 40 Gewichtsteilen Reaktivmodifier und 1,5 Gewichtsteilen Tinuvin 360, als PVDF wird das Produkt KT 1000 von Kureha eingesetzt. Der Reaktivmodifier ist ein Copolymer aus Methylmethacrylat, Methylacrylat und Methacrylsäure im Gewichtsverhältnis 88:4:8.
Coextrusionsbeschichtung
Gesamtdicke 0,31mm

Das PMMA ist ausschließlich Reaktiv-PMMA (einpolymerisierte funktionale Gruppen zur Anbindung an den Haftvermittler). Der PVDF Anteil führt zu besserem Brandverhalten.

### Eigenschaften

| | |
|---|---|
| Zugversuch - Zugfestigkeit [MPa] | 72,3 |
| Zugversuch - Bruchdehnung [%] | 30,0 |
| Weiterreißversuch - mittlere Weiterreißkraft [N] | 31,7 |
| Lichtransmissionsgrad τ_{D65} [%] | 76,82 |
| Transmissionsspektrum 250nm bis 2.500 nm | Abb.4.a |
| Transmissionsspektrum 2,5 µm bis 25 µm | Abb.4.b |

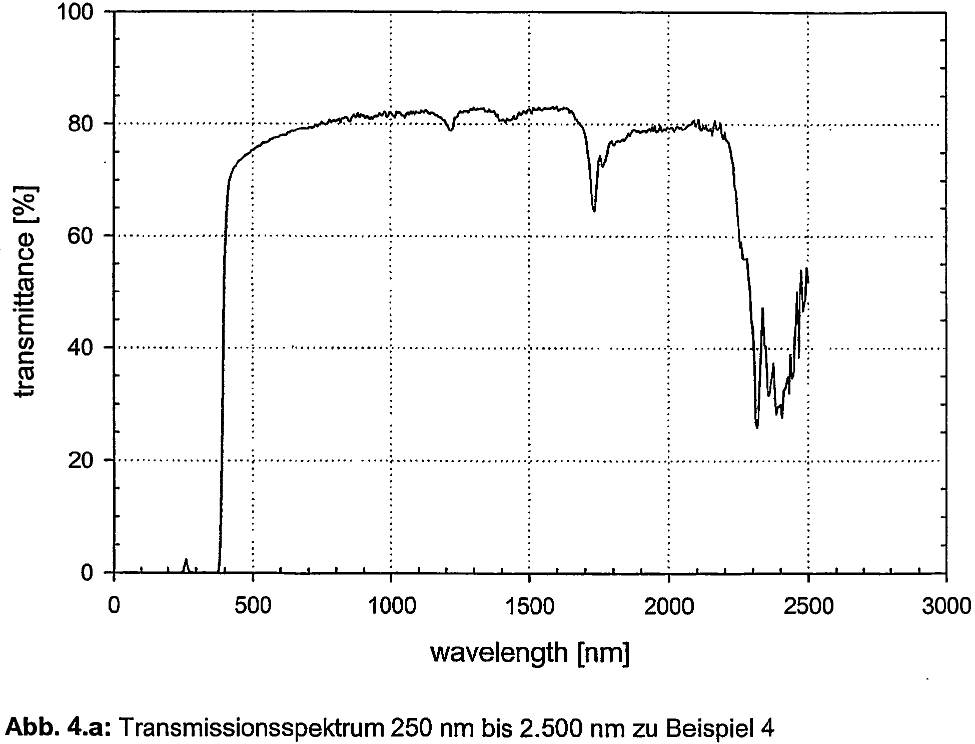

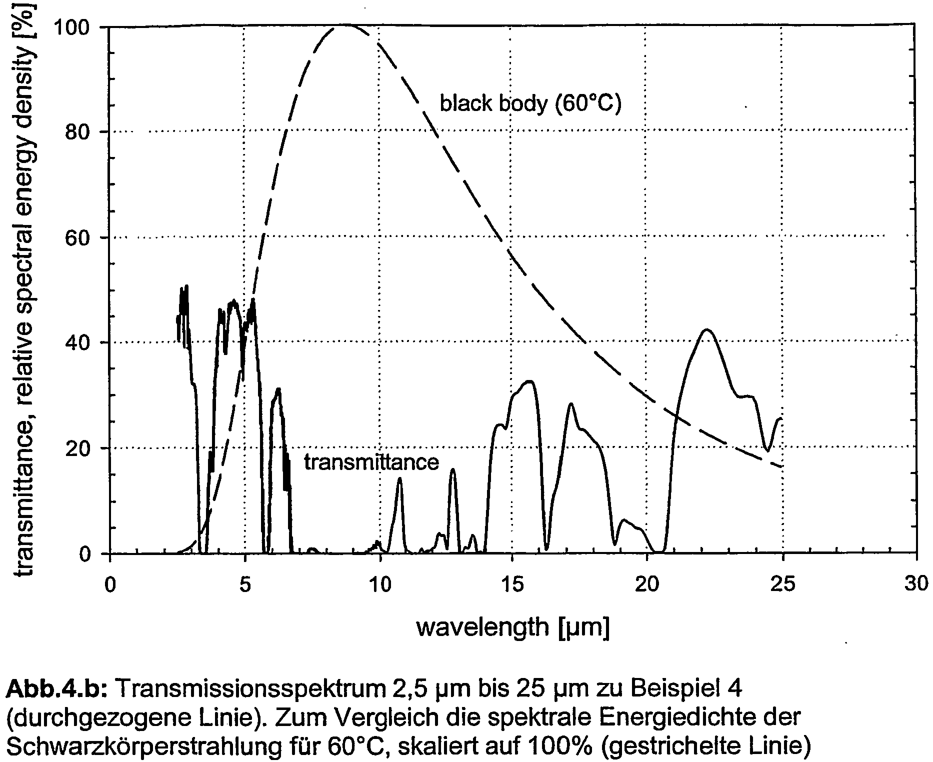

### Eigenschaften

Die Eigenschaften sind ähnlich gut wie bei den Beispielen 2 und 3. So ist der Transmissionsgrad für die Wärmestrahlung des Bodens ähnlich niedrig wie im Beispiel 3. Der PVDF Anteil führt nicht zu einer Verschlechterung.

## Patentansprüche

1. Kunststoffformkörper, aufgebaut aus mehreren Schichten, wobei die einzelnen Schichten aus folgenden Materialen bestehen:
- Schicht 1 aus einem olefinischen Polymer oder aus einem Ethylvinylacetat-Polymer oder aus einem Copolymer aus einem Olefin und Ethylvinylacetat,
- Schicht 2 aus einem Gewebe aus verstreckten Fasern aus einem thermoplastischen Polymer,
- Schicht 3 aus einem olefinischen Polymer oder aus einem Ethylvinylacetat-Polymer oder aus einem Copolymer aus einem Olefin und Ethylvinylacetat,
- Schicht 4 aus einem Haftvermittler,
- Schicht 5 aus einem Polymethylmethacrylat

2. Kunststoffformkörper nach Anspruch 1,
**dadurch gekennzeichnet,**
**dass**
➢ Schicht 1 zwischen 20 µm und 100 µm dick ist,
**➢** Schicht 2 aus einem Gewebe aus verstreckten Fasern mit den Abmessungen von 8 mm x 8 mm bis 12 mm x 12 mm Fasern pro inch (4,54 cm), 1.400 bis 800 demier besteht,
**➢** Schicht 3 zwischen 0 µm und 100 µm dick ist,
**➢** Schicht 4 zwischen 2 µm und 100 µm dick ist,
➢ Schicht 5 zwischen 5 µm und 150 µm dick ist.

3. Kunststoffförmkörper nach Anspruch 1,
**dadurch gekennzeichnet,**
**dass** Schicht 2 aus einem Polyethylen hoher Dichte (HDPE) besteht.

4. Kunststoffformkörper nach Anspruch 1,
**dadurch gekennzeichnet,**
**dass** Schicht 1 und Schicht 3 aus
a) einem polaren Copolymer aus EVA und LDPE besteht oder
b) aus EVA besteht oder
c) aus LDPE besteht oder
d) aus Copolymeren aus LDPE und polaren Comonomeren oder
e) aus Copolymeren aus PE und polaren Comonomeren besteht.

5. Kunststoffformkörper nach Anspruch 1,
**dadurch gekennzeichnet,**
**dass** Schicht 4 aus Copolymeren aus PE und weiteren, polaren Monomeren besteht.

6. Kunststoffformkörper nach Anspruch 1,
**dadurch gekennzeichnet,**
**dass** Schicht 4 aus einem lösungsmittelbasierten Kleber besteht.

7. Kunststoffformkörper nach Anspruch 1,
**dadurch gekennzeichnet,**
**dass** Schicht 4 aus einem modifizierten PE besteht.

8. Kunststoffformkörper nach Anspruch 1,
**dadurch gekennzeichnet,**
**dass** Schicht 5 aus einem PMMA-Copolymer folgender Zusammensetzung besteht: aus polymerisierten Monomermischungen a, b und gegebenenfalls c
wobei a. aufweist:
A) 20 Gew,% bis 100 Gew.-% Methylmethacrylat,
B) 0 Gew.-% bis 80 Gew.-% eines von Methylmethacrylat verschiedenen 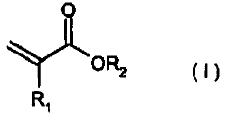 (Meth)acrylats der Formel I,
worin
R₁ für Wasserstoff oder Methyl und
R₂ für einen linearen oder verzweigten Alkylrest oder Cycloalkylrest mit 1 bis 18 Kohlenstoffatomen oder für Phenyl oder Naphthyl steht,
C) 0 Gew.-% bis 40 Gew.-% eines weiteren von a.A) und a. B) verschiedenen mit diesen jedoch gegebenenfalls copolymerisierbaren ungesättigten Monomers und wobei (a.A) bis (a.C) zusammen 100 Gew.-% ergeben, und zu 100 Gew.-Teilen dieser polymerisierten Mischung 0-80 Gew.-Teile weiterer Polymere sowie übliche Zuschläge in Mengen von 0 bis 150 Gew.-Teilen zugegeben werden;
und b. aufweist:
A) 20 Gew.-% bis 99 Gew.-% eines Methyl(meth)acrylats der Formel I,
worin
R₁ für Wasserstoff oder Methyl und
R₂ für einen linearen oder verzweigten
Alkylrest oder Cycloalkylrest mit 1 bis 18 Kohlenstoffatomen oder für Phenyl oder Naphthyl steht,
B) 1 Gew.-% bis 80 Gew.-% eines oder mehrerer ethylenisch ungesättigter von b.A) unterschiedlicher mit (b.A) copolymerisierbarer "Reaktiv-Monomere", wobei (b.A) und (b.B) zusammen 100 Gew.-% ergeben und zu 100 Gew.-Teilen dieser polymerisierten Mischung 0 Gew.-Teile - 80 Gew.-Teile weiterer Polymere sowie übliche Zuschläge in Mengen von 0 Gew.-Teilen bis 150 Gew.-Teilen zugegeben werden
und das Gewichtsverhältnis zwischen a. und b. zwischen 50:50 und 100:0 liegen kann,
und die gegebenenfalls vorhandene Komponente c. ein Polymer sein kann.

9. Kunststoffformkörper nach Anspruch 8,
**dadurch gekennzeichnet,**
**dass** das PMMA-Polymer schlagzäh ausgerüstet ist.

10. Kunststoffformkörper nach Anspruch 8,
**dadurch gekennzeichnet,**
**dass** man als Komponente c. ein Polymer aus der Gruppe, bestehend aus Polyvinylidenfluorid, Polyvinylchlorid, Polyethylen, Polypropylen, Polyester oder Polyamiden auswählt und das Polymer a durch das Polymer c entweder ganz oder teilweise ersetzt wird.

11. Kunststoffformkörper nach Anspruch 8,
**dadurch gekennzeichnet,**
**dass** man Lichtschutzmittei wie UV-Absorber und HALS (Hindered Amine Light Stabilizers) verwendet.

12. Kunststoffformkörper nach Anspruch 11,
**dadurch gekennzeichnet,**
**dass** man als UV-Absorber Triazine verwendet.

13. Verfahren zur Extrusionsbeschichtung von Geweben aus gestreckten Fasern aus einem thermoplastischen Polymer,
**dadurch gekennzeichnet,**
**dass** man auf die Unterseite des Gewebes eine erste Schicht aus einem olefinischen Polymer oder aus einem Ethylvinylaootat-Polymer oder aus einem Copolymer aus einem Olefin und Ethylvinylacetat aufbringt und in einem zweiten, vorzugsweise gleichzeitig mit dem ersten durchzuführenden Schritt auf die Oberseite des Kunststoffformkörpers eine zweite Kunststoffschicht aus einem olefinischen Polymer oder aus einem Ethylvinylacetat-Polymer oder aus einem Copolymer aus einem Olefin und Ethylvinylacetat aufbringt und anschließend auf die Oberseite der zweiten Kunststoffschicht eine dritte Kunststoffschicht, bei der es sich um einen Haftvermittler handelt, aufbringt und anschließend als letzte Schicht die PMMA-Schicht aufbringt.

14. Verfahren zur Extrusionsbeschichtung von Kunststoffformkörpern nach Anspruch 13,
**dadurch gekennzeichnet, dass**
man einer oder mehreren der Schichten 1 bis 5 ein oder mehrere Flammschutzmittel hinzufügt.

15. Verfahren zur Extrusionsbeschichtung von Kunststoffformkörpern gemäß Anspruch 13 oder 14,
**dadurch gekennzeichnet,**
**dass** man die Schichten 4 und 5 als mehrschichtigen Schmelzefilm aufbringt.

16. Verfahren zur Extrusionsbeschichtung von Kunststoffformkörpern gemäß einem der Ansprüche 13 bis 15,
**dadurch gekennzeichnet,**
**dass** man vorzugsweise in einem gleichzeitig stattfindenden Arbeitsschritt Schicht 1 auf die Unterseite von Schicht 2 und die Schichten 3 bis 5 als mehrschichtigen Schmelzefilm (Coextrudat) auf die Oberseite von Schicht 2 extrudiert.

17. Verwendung des Kunststoffformkörpers gemäß Anspruch 1 in Außenanwendungen wie Gewächshausfolien und Architekturmembranen.

## Claims

1. Plastics moulding of multilayer structure, where the individual layers are composed of the following materials:
- layer 1 of an olefinic polymer or of an ethyl-vinyl acetate polymer or of a copolymer of an olefin and ethyl-vinyl acetate,
- layer 2 of a textile of oriented fibres of a thermoplastic polymer,
- layer 3 of an olefinic polymer or of an ethyl-vinyl acetate polymer or of a copolymer of an olefin and ethyl-vinyl acetate,
- layer 4 of an adhesion promoter,
- layer 5 of a polymethyl methacrylate.

2. Plastics moulding according to Claim 1,
**characterized in that**
➢ layer 1 has a thickness of from 20 µm to 100 µm,
➢ layer 2 is composed of a textile of oriented fibres with dimensions from 8 mm x 8 mm to 12 mm x 12 mm fibres per inch (4.54 cm), 1400 to 800 dernier,
➢ layer 3 has a thickness of from 0 µm to 100 µm,
➢ layer 4 has a thickness of from 2 µm to 100 µm,
➢ layer 5 has a thickness of from 5 µm to 150 µm.

3. Plastics moulding according to Claim 1,
**characterized in that**
layer 2 is composed of a high-density polyethylene (HDPE).

4. Plastics moulding according to Claim 1,
**characterized in that**
layer 1 and layer 3 are composed of
a) a polar copolymer of EVA and LDPE or
b) of EVA or
c) of LDPE or
d) of copolymers of LDPE and polar comonomers or
e) of copolymers of PE and polar comonomers.

5. Plastics moulding according to Claim 1,
**characterized in that**
layer 4 is composed of copolymers of PE and other, polar monomers.

6. Plastics moulding according to Claim 1,
**characterized in that**
layer 4 is composed of a solvent-based adhesive.

7. Plastics moulding according to Claim 1,
**characterized in that**
layer 4 is composed of a modified PE.

8. Plastics moulding according to Claim 1,
**characterized in that**
layer 5 is composed of a PMMA copolymer of the following constitution: of polymerized monomer mixtures a, b and, if appropriate, c,
where a. comprises:
A) from 20 to 100% by weight of methyl methacrylate,
B) from 0 to 80% by weight of a (meth)acrylate of the formula I, other than methyl methacrylate, 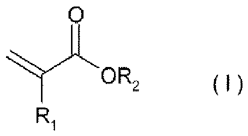 where
R₁ is hydrogen or methyl and
R₂ is a linear or branched alkyl radical or cycloalkyl radical having from 1 to 18 carbon atoms or is phenyl or naphthyl,
C) from 0 to 40% by weight of a further unsaturated monomer other than a.A) and a.B), but copolymerizable with these,
where (a.A) to (a.C) together give 100% by weight, and from 0 to 80 parts by weight of further polymers, and also amounts of from 0 to 150 parts by weight of conventional additives, are added to 100 parts by weight of this polymerized mixture;
and b. comprises:
A) from 20 to 99% by weight of a methyl (meth)-acrylate of the formula I,
where
R₁ is hydrogen or methyl and
R₂ is a linear or branched alkyl radical or cycloalkyl radical having from 1 to 18 carbon atoms, or is phenyl or naphthyl,
B) from 1 to 80% by weight of one or more ethylenically unsaturated "reactive monomers" other than b.A) but copolymerizable with (b.A), where (b.A) and (b.B) together give 100% by weight, and where from 0 to 80 parts by weight of further polymers, and also amounts of from 0 to 150 parts by weight of conventional additives, are added to 100 parts by weight of this polymerized mixture
and the ratio by weight between a. and b. can be from 50:50 to 100:0,
and the optionally present component c. can be a polymer.

9. Plastics moulding according to Claim 8,
**characterized in that**
the PMMA polymer has been rendered impact-resistant.

10. Plastics moulding according to Claim 8,
**characterized in that**
the component c. used comprises a polymer from the group consisting of polyvinylidene fluoride, polyvinyl chloride, polyethylene, polypropylene, polyester or polyamides, and the polymer a is replaced either completely or to some extent by the polymer c.

11. Plastics moulding according to Claim 8,
**characterized in that**
use is made of light stabilizers, such as UV absorbers and HALS (hindered amine light stabilizers).

12. Plastics moulding according to Claim 11,
**characterized in that**
the UV absorbers used comprise triazines.

13. Process for the extrusion coating of textiles of oriented fibres of a thermoplastic polymer,
**characterized in that**
a first layer of an olefinic polymer or of an ethyl-vinyl acetate polymer or of a copolymer of an olefin and ethyl-vinyl acetate is applied to the lower side of the textile, and, in a second step preferably to be carried out simultaneously with the first step, a second plastics layer of an olefinic polymer or of an ethyl-vinyl acetate polymer or of a copolymer of an olefin and ethyl-vinyl acetate is applied to the upper side of the plastics moulding, and then a third plastics layer, which is an adhesion promoter, is applied to the upper side of the second plastics layer, and then the PMMA layer is applied as final layer.

14. Process for the extrusion coating of plastics mouldings according to Claim 13,
**characterized in that**
one or more flame retardants is/are added to one or more of the layers 1 to 5.

15. Process for the extrusion coating of plastics mouldings according to Claim 13 or 14,
**characterized in that**
the layers 4 and 5 are applied in the form of a multilayer melt film.

16. Process for the extrusion coating of plastics mouldings according to any of Claims 13 to 15,
**characterized in that**,
preferably in one simultaneous operation, layer 1 is extruded onto the lower side of layer 2 and layers 3 to 5 are extruded in the form of a multilayer melt film (coextrudate) onto the upper side of layer 2.

17. Use of the plastics moulding according to Claim 1 in outdoor applications, such as greenhouse films and architectural membranes.

## Revendications

1. Corps moulé en plastique, composé de plusieurs couches, les couches individuelles étant constituées des matériaux suivants :
- couche 1 en un polymère oléfinique ou en un polymère d'éthyle-acétate de vinyle ou en un copolymère d'une oléfine et d'éthyle-acétate de vinyle,
- couche 2 en un tissu de fibres étirées en un polymère thermoplastique,
- couche 3 en un polymère oléfinique ou en un polymère d'éthyle-acétate de vinyle ou en un copolymère d'une oléfine et d'éthyle-acétate de vinyle,
- couche 4 en un promoteur d'adhésion,
- couche 5 en un polyméthacrylate de méthyle.

2. Corps moulé en plastique selon la revendication 1, **caractérisé en ce que**
- la couche 1 a une épaisseur comprise entre 20 µm et 100 µm,
- la couche 2 est constituée d'un tissu de fibres étirées ayant les dimensions de 8 mm x 8 mm à 12 mm x 12 mm de fibres par pouce (4,54 cm), 1 400 à 800 deniers,
- la couche 3 a une épaisseur comprise entre 0 µm et 100 µm,
- la couche 4 a une épaisseur comprise entre 2 µm et 100 µm,
- la couche 5 a une épaisseur comprise entre 5 µm et 150 µm.

3. Corps moulé en plastique selon la revendication 1, **caractérisé en ce que** la couche 2 est constituée d'un polyéthylène haute densité (HDPE).

4. Corps moulé en plastique selon la revendication 1, **caractérisé en ce que** la couche 1 et la couche 3 sont constituées
a) d'un copolymère polaire d'EVA et de LDPE, ou
b) d'EVA, ou
c) de LDPE, ou
d) de copolymères de LDPE et de comonomères polaires, ou
e) de copolymères de PE et de comonomères polaires.

5. Corps moulé en plastique selon la revendication 1, **caractérisé en ce que** la couche 4 est constituée de copolymères de PE et d'autres monomères polaires.

6. Corps moulé en plastique selon la revendication 1, **caractérisé en ce que** la couche 4 est constituée d'un adhésif à base de solvant.

7. Corps moulé en plastique selon la revendication 1, **caractérisé en ce que** la couche 4 est constituée d'un PE modifié.

8. Corps moulé en plastique selon la revendication 1, **caractérisé en ce que** la couche 5 est constituée d'un copolymère de PMMA de la composition suivante :
mélanges de monomères polymérisés a, b et
éventuellement c ;
a. comprenant :
A) 20 % en poids à 100 % en poids de méthacrylate de méthyle,
B) 0 % en poids à 80 % en poids d'un (méth)acrylate de formule I différent du méthacrylate de méthyle 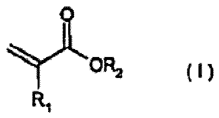 dans laquelle
R₁ représente hydrogène ou méthyle, et
R₂ représente un radical alkyle linéaire ou ramifié ou un radical cycloalkyle de 1 à 18 atomes de carbone ou phényle ou naphtyle,
C) 0 % en poids à 40 % en poids d'un autre monomère insaturé différent de a.A) et a.B), mais toutefois éventuellement copolymérisable avec ceux-ci,
(a.A) à (a.C) formant ensemble 100 % en poids, et 0 à 80 parties en poids d'autres polymères et des additifs usuels en quantités de 0 à 150 parties en poids étant ajoutés à 100 parties en poids de ce mélange polymérisé ;
et b. comprenant :
A) 20 % en poids à 99 % en poids d'un (méth)acrylate de méthyle de formule I, dans laquelle
R₁ représente hydrogène ou méthyle, et
R₂ représente un radical alkyle linéaire ou ramifié
ou un radical cycloalkyle de 1 à 18 atomes de carbone ou phényle ou naphtyle,
B) 1 % en poids à 80 % en poids d'un ou de plusieurs « monomères réactifs » éthyléniquement insaturés différents de b.A), copolymérisables avec (b.A),
(b.A) et (b.B) formant ensemble 100 % en poids, et 0 partie en poids à 80 parties en poids d'autres polymères et des additifs usuels en quantités de 0 partie en poids à 150 parties en poids étant ajoutés à 100 parties en poids de ce mélange polymérisé ;
et le rapport en poids entre a. et b. pouvant être compris entre 50:50 et 100:0,
et le composant c. éventuellement présent pouvant être un polymère.

9. Corps moulé en plastique selon la revendication 8, **caractérisé en ce que** le polymère de PMMA est rendu résistant aux impacts.

10. Corps moulé en plastique selon la revendication 8, **caractérisé en ce qu'**un polymère du groupe constitué par le polyfluorure de vinylidène, le polychlorure de vinyle, le polyéthylène, le polypropylène, le polyester ou les polyamides est choisi en tant que composant c. et le polymère a est remplacé en totalité ou en partie par le polymère c.

11. Corps moulé en plastique selon la revendication 8, **caractérisé en ce que** des agents photoprotecteurs tels que des absorbeurs UV et des HALS (Hindered Amine Light Stabilizers) sont utilisés.

12. Corps moulé en plastique selon la revendication 11, **caractérisé en ce que** des triazines sont utilisées en tant qu'absorbeurs UV.

13. Procédé de revêtement par extrusion de tissus en fibres étirées en un polymère thermoplastique, **caractérisé en ce qu'**une première couche en un polymère oléfinique ou en un polymère d'éthyle-acétate de vinyle ou en un copolymère d'une oléfine et d'éthyle-acétate de vinyle est appliquée sur le côté inférieur du tissu et, lors d'une deuxième étape, à réaliser de préférence simultanément à la première étape, une deuxième couche de plastique en un polymère oléfinique ou en un polymère d'éthyle-acétate de vinyle ou en un copolymère d'une oléfine et d'éthyle-acétate de vinyle est appliquée sur le côté supérieur du corps moulé en plastique, puis une troisième couche de plastique, qui consiste en un promoteur d'adhésion, est appliquée sur le côté supérieur de la deuxième couche de plastique, puis la couche de PMMA est appliquée en tant que dernière couche.

14. Procédé de revêtement par extrusion de corps moulés en plastique selon la revendication 13, **caractérisé en ce qu'**un ou plusieurs agents ignifuges sont ajoutés à une ou plusieurs des couches 1 à 5.

15. Procédé de revêtement par extrusion de corps moulés en plastique selon la revendication 13 ou 14, **caractérisé en ce que** les couches 4 et 5 sont appliquées sous la forme d'un film multicouche de masse fondue.

16. Procédé de revêtement par extrusion de corps moulés en plastique selon l'une quelconque des revendications 13 à 15, **caractérisé en ce que** la couche 1 est extrudée sur le côté inférieur de la couche 2 et les couches 3 à 5 sont extrudées sous la forme d'un film multicouche de masse fondue (coextrudat) sur le côté supérieur de la couche 2, de préférence en une étape de travail ayant lieu simultanément.

17. Utilisation du corps moulé en plastique selon la revendication 1 dans des applications extérieures telles que des films pour serres et des membranes architecturales.
